# EUROPEAN PATENT SPECIFICATION

(11) **EP 0 473 730 B1**
(45) Date of publication and mention of the grant of the patent: **18.12.1996**
(21) Application number: 90916791.8
(22) Date of filing: 09.11.1990
(51) Int. Cl.: B60B 7/14

(54) **HUB-CAP OF A MAGWHEEL WITH A FITTING BASE**
RADZIERKAPPE MIT ZWISCHENRING
ENJOLIVEUR A DISQUE DE MONTAGE POUR JANTE EN MAGNESIUM

(30) Priority: 12.12.1989 GR 89010081
(43) Date of publication of application: 11.03.1992
(73) Proprietor: IOANNIS, Karras, GR-551 31 Thessaloniki (GR)
(72) Inventor: IOANNIS, Karras, GR-551 31 Thessaloniki (GR)
(86) International application number: GR9000007
(87) International publication number: WO9108916

(56) References cited:
- EP-A- 0 116 265
- EP-A- 0 232 942
- EP-A- 0 388 539
- GB-A- 2 046 185

## Description

The present invention relates to the assembly of a vehicle wheel-cap in combination with a fitting base in order to enable the wheel-cap to adjust on a vehicle wheel as specified in the preamble of claim 1 and as disclosed for example in the document EP-A-0 388 539.

So far to adjust the wheel cap on the vehicle wheels various methods were used that practically proved useful only to a small number of vehicle wheels and had no practical use or application. For overcoming the limitations of the prior art a motor vehicle hub cover or cap assembly in accordance with the present invention is characterised by the features specified in the characterising portion of claim 1.

The holding of the cap is effected around the hub on the disk-shaped base for adjustment, unlike the GB-A-2046185 that uses a support base consisting of a sheet designed in a parallel arrangement to receive the support in the center with the cylinder projecting to the hub, which obstructs the cap to adjust on the vehicle wheels.

Similarly, the EP-A-388539 also uses a support sheet formed in such a way that can fix the cap around the hub, as does our disk-shaped base for adjustment. However, it uses bolts to hold the cap in the middle of the hub, which concerns a small number of vehicles, whereas our support is effected on the disk-shaped base around the hub.

The makers of heavy road vehicles do not provide for the desired projection proposed by patent US-A-4632465 to create the described supports at the point of support of its extenders. As it was mentioned above, the US-A-4632465 uses only independent tubular screws. In this way the cap is fixed on them, whereas we use a disk-shaped base for adjustment. Therefore, this system cannot effectively be applicable.

The proposed disk-shaped base for adjustment can be applied on all existing wheels unlike the other applications mentioned.

The cap is fixed on the wheel by means of perforated screws that are screwed into the corresponding threaded openings of the disk-shaped base.

The proposed disk-shaped base makes sure its application on all vehicle wheels.

The application is given in connection with the accompanying drawings.

FIG. 1 shows in perspective the whole application of the wheel cap on the wheel.

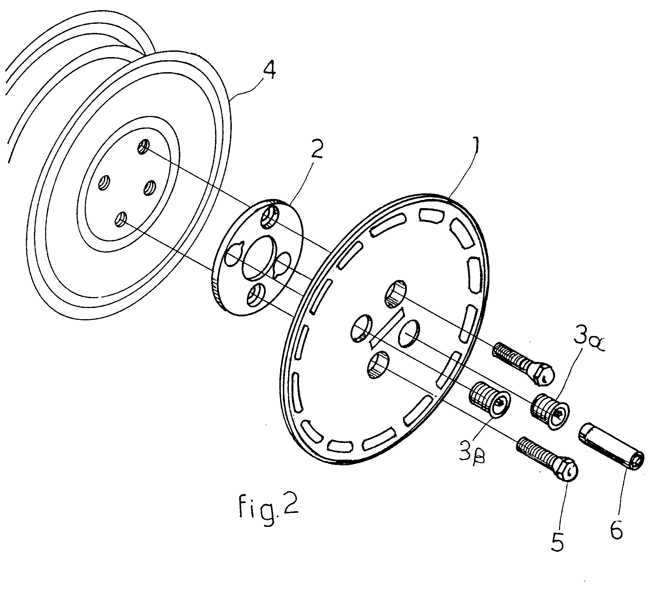

FIG. 2 shows in perspective the phases of assembly.

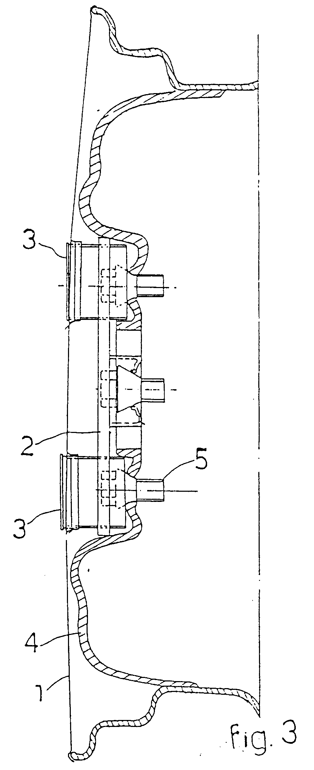

FIG. 3 shows a section the application of the cap on the wheel.

FIG. 4 shows in perspective the disk-shaped base for adjustment in partial section.

FIG. 5 shows in perspective the receptacle-cup (opening) of adjustment in partial section.

FIG. 6 shows in perspective a smaller perforated screw.

FIG. 7 shows in perspective a bigger perforated screw.

FIG. 8 shows in perspective the key of disassembling the perforated screws.

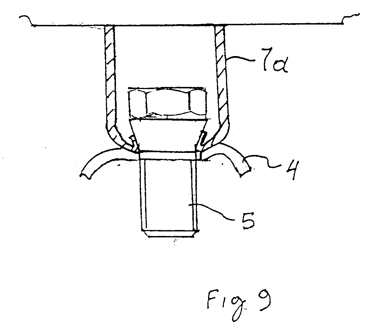

FIG. 9 shows the border formation of the screw receptacle (opening) in section at its application on the wheel.

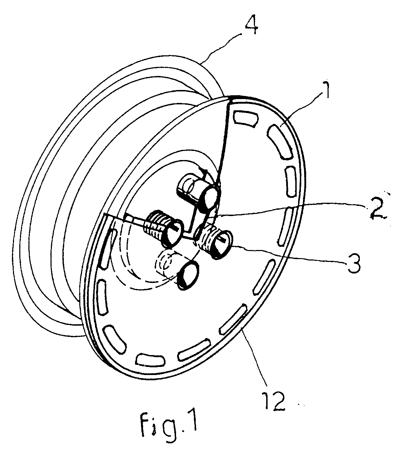

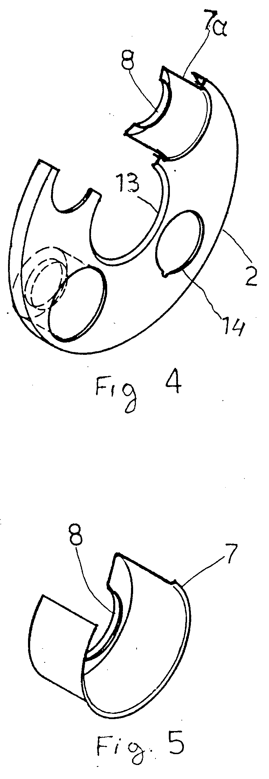

Referring to the drawings the invention consists of:
a wheel (4), cap (1) (FIG. 1) which bears a ridge in its periphery,
a disk-shaped base for adjustment (2) bearing a central aperture (13) (FIG. 4). It bears around it screw receptacles-cups (7a) and other threaded apertures (14).

The disk-shaped base for adjustment (2) is fixed on the wheel by means of screws (5) that press the borders (8) (FIG. 4) on the wheel body (4) formed according to the screw heads.

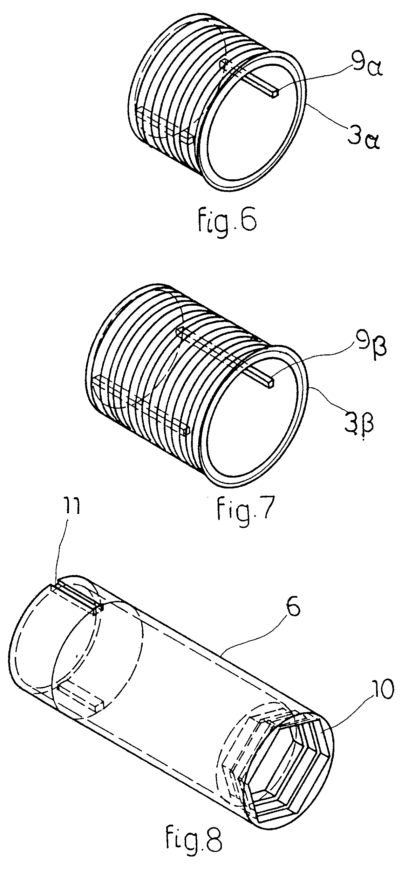

This enables the right adjustment of the cap through any screw existing on the wheel as well as on screws of different diameters. In term, after the adjustment of the disk-shaped base (2) the cap (1) is adjusted upon the wheel (4) and then the perforated screws (3a) and (3b) are screwed according to the distance between the screws by means of a suitable key (6) which bears at one end channels (11) (FIG. 8) which apply on corresponding points (9a) and (9b) of the perforated screws (3a) and (3b) screwing them on the apertures (14) of the disk-shaped base for adjustment (2) (FIG. 4).

The key (6) (FIG. 8) bears at its other end internally a hexagonal scaled formation (10) to cover the different hexagonal screws and to facilitate the insertion and extraction of screw (5) after the use of the wheel key. The surface of the cap can bear different formations and the cap is available in different sizes for any wheel size and screw perforation (distance between screw openings) independently on the number of screws on the wheel. In market it is available in different sizes always in a set (cap - disk-shaped base - perforated screws - key).

The number of apertures on every wheel determines the formation of the disk-shaped base, i.e. the increase of the receptacles (2, 3, 4) and the other numerical data.

It can be made from any available material.

## Claims

1. A motor vehicle wheel hub cover or cap (1) assembly, comprising means (2, 3a or 3b, 5) for securing the wheel hub cover or cap (1) to the wheel (4) comprising an intermediate support element or base (2) placed between the cover (1) and the wheel (4) and having a series of threaded openings (14) for fixing said support element or base (2) to the wheel-hub by screws (5) and a series of threaded openings (14) for fixing the cover to the support element by tube-shaped screws (3a or 3b) in said threaded openings (14), characterised in that said intermediate support element or base (2) consists of a disk (2) having a central aperture (13) and a series of openings arranged around said central aperture (13) in correspondence with holes in the wheel and in the cover, whereby some of these openings bear a screw-receiving cup (7a) with a border (8) for receiving said screws (5) so that said screws fix said disk to the wheel (4) at a distance defined by the depth of said cup (7a), and whereby the other threaded openings (14) have a threaded formation in which further screws in form of a tube-shaped screws (3a or 3b) are mounted for holding the wheel hub cover or cap (1) on the wheel (4) by means of corresponding holes in the cover (1).

2. A wheel hub cover or cap (1) assembly as disclosed in claim 1 characterised in that, said tube shaped perforated screws (3a or 3b) being different in length and having a diameter greater than said wheel-hub screws (5).

3. A wheel hub cover or cap (1) assembly as disclosed in claim 1 or 2 characterised in that, said tube shaped perforated screws (3a or 3b) having internal applying point whereby a suitable key (6) which bears at one end channels can apply for screwing them on the threaded aperture (14) of the disk shaped base (2) for adjustment.

## Patentansprüche

1. Montage der kraftfahrzeugradblende (1), die aus drei Hauptelementen (2, 3a or 3b, 5) zur Befestigung der Blende (1) auf dem Rad (4) besteht, mit einem Abstutzelement oder Abstutzbock (2), der zwischen der Radblende (1) und dem Rad (4) angebracht ist und eine Reihe von Öffnungen (14) zur Befestigung des vorerwähnten Abstutzelements oder Abstutzblocks (2) auf den Radfelgen mit den Zylinderschrauben (3a oder 3b), sowie eine Reihe von Gewindeöffnungem (14) zur Befestigung der Radblende auf dem Abstutzelement durch Zylinderschrauben (3a oder 3b) in der vorerwähnten Gewindeöffnung (14), aufweist. Es ist dadurch gekennzeichnet, dass das vorerwähnte Abstutzelement oder der Abstutzbock (2) aus einer Scheibe (2) besteht, die eine Zentralöffnung (13) und eine Reihe von anderen Öffnungen, um der vorerwähnten Zentralöffnung (13) aufweist, die den Öffnungen am Rad selbst und auf der Radblende entsprechen. Einige dieser Öffnungen haben einen Schraubenanschluss (7a) mit einem Rand (8) zum Aufnehmen obiger Schrauben (5), so dass diese Schrauben die Scheibe auf dem Rad (4) in einer Entfernung befestigen, die von der Type des Auschlusses (7a) bestimmt wird. Die anderen Öffnungen (14) weisen Gewinden auf, wo weitere Zylinderschrauben (3a oder 3b) montiert werden, um die Radblende (1) auf dem Rad (4) mit der Hilfe entsprechender Löcher auf der Blende halten.

2. Eine Radblendenmontage (1), ersichtlich aus der Beanspruchung 1, gekennzeichnet dadurch, dass die vorerwähnten perforierten Zylinderchrauben (3a oder 3b) einen Läugenunterschied aufweisen und einen grössenen Durchmesser als die Schrauben (5) der Felge haben.

3. Eine Radblendenmontage (1), ersichtlich aus der Beanspruchung 1 oder 2, gekennzeichnet dadurch, dass die perforierten Zylinderschrauben (3a oder 3b) eine Aussenpasstelle haben, welche durch einen entsprechenden Schlüssel (6) in Betrieb gesetzt wird, welcher Schlüssel auf einem seiner Enden Rillen hat, die beim Anschrauben der Scheibebasis im Gewindeloch (14) und bei der Justierung helfen.

## Revendications

1. L' assemblage de l' enjoliveur de roue (1) est composé des éléments (2,3a,3b,5) d' attachement de l' enjoliveur à la roue (4) ayant un élément de support intermédiaire ou base (2) placé entre l' enjoliveur (1) et la roue (4) et ayant une série d' ouvertures (14) pour fixer le dit élément de support ou base (2) sur l' enjoliveur par des vis (5) et une série d' ouvertures en spirale pour fixer l' enjoliveur sur l' élément de support par des vis qui ont la forme de tube (3a, 3b) sur les dites ouvertures (14) en spirale; il est caracterisé par le fait que le dit élément de support intermédiaire ou base (2) consiste d' un disque (2) ayant une trou centrale (13) et une série d' autres trus autour de cette trou centrale (13) correspondant à des trous sur la roue et l' enioliveur; quelques unes de ces ouvertures supportent un sorte de coupe pour vis (7a) qui a une bordure (8) pour recevoir ces vis (5); de cette façon, ces vis fixent le disque sur la roue (4) à une distance définie par le profondeur de la dite coupe (7a); aussi, les autres ouvertures en spirale (14) ont une formation à filetage dans laquelle sont montées des vis en forme de tube (3a, 3b) pour garder l' enioliveur de roue (1) sur la roue (4) par moyen des troues sur la couvercle (1).

2. L'assemblage de l' enioliveur (1) comme celui-ci a été décrit au numéro 1, est caracterisé par le fait que les dites vis qui ont la forme de tube (3a, 3b) ont de différents longueurs et une diamètre plus grande que les vis (5) de l' enioliveur.

3. L'assemblage de l'enioliveur (1) comme il a été décrit au numéro 1 ou 2, est caracterisé par le fait que les vis qui ont la forme de tube (3a, 3b) ont un point d' application interne qui fonctionne par une clé convenable (6) qui porte à son bout des canaux qui aident à viser les vis par sur l'ouverture en spirale (14) de la base (2) pour adaptation.
